# EUROPEAN PATENT APPLICATION

(11) **EP 3 951 319 A1**
(43) Date of publication of application: **09.02.2022**
(21) Application number: 21194290.9
(22) Date of filing: 01.06.2016
(51) Int. Cl.: G01C 21/00

(54) **INFORMATION PROCESSING DEVICE AND DETECTION DEVICE**

(62) Divisional of application: 16904021.9
(71) Applicant: Pioneer Corporation, Tokyo 113-0021 (JP)
(72) Inventor: KODA, Takeshi, Kawagoe-shi Saitama, 350-8555 (JP); MITO, Kenji, Kawagoe-shi Saitama, 350-8555 (JP)
(74) Representative: Viering, Jentschura & Partner mbB Patent- und Rechtsanwälte

(57) **Abstract**

Feature information IF for each target feature of detection by an external sensor 31 of a vehicle mounted device 1 is registered in an advanced map DB 43 stored on a server device 4. The data structure of the feature information IF is provided with sensor attribute fields that include configuration information or environment information related to feature detection. The server device 4 updates the sensor attribute field through statistical analysis on condition information IC that indicates conditions at the time of feature detection and that is received from a plurality of vehicle mounted devices 1.

## Description

### TECHNICAL FIELD

The present invention relates to a technology for updating map data.

### BACKGROUND TECHNIQUE

There is known a technology for detecting a feature situated around the own vehicle. For example, Patent Reference-1 discloses a vehicle mounted system equipped with a LIDAR or a camera configured to capture a peripheral image, wherein the LIDAR detects a point cloud of the surface of an object by scanning in horizontal direction with a laser light emitted intermittently and receiving the reflection light.

Patent Reference-1: Japanese Patent Application Laid-open under No. 2014-89691

### DISCLOSURE OF INVENTION

### PROBLEM TO BE SOLVED BY THE INVENTION

The detection accuracy of a feature which is situated around the own vehicle varies depending on the type and/or model of a sensor which detects the feature. Additionally, even for the same sensor, the type of features easy to detect possibly varies depending on the peripheral environment. Thus, in order to raise the detection accuracy of the feature, an appropriate selection of the type and configuration of the sensor to be used is required. In contrast, it needs huge costs and time to register in map data information associated with a proper type and configuration of the sensor with respect to each feature. The above issues are not disclosed in Patent Reference-1.

The above is an example of issues to be solved by the present invention. An object of the present invention is to suitably detect a feature by a sensor.

### MEANS FOR SOLVING THE PROBLEM

One invention is a feature data structure regarding a feature including a detection-related information field configured to include configuration information or environmental information which are related to detection of the feature, the detection-related information field being updatable based on a detection result by a detection device which detects the feature.

Another invention is an information processing device including: a storage unit configured to store a record with a feature data structure regarding a feature, the feature data structure including a detection-related information field configured to include configuration information or environmental information which are related to detection of the feature, the detection-related information field being updatable based on a detection result by a detection device which detects the feature, the detection device being mounted on a vehicle; an acquisition unit configured to acquire state information which includes information associated with at least one of, at a time when a detection of the feature by the detection device succeeds or fails, a state of the vehicle, a state of surroundings of the vehicle and a state of the detection device; and an update unit configured to update the detection-related information field based on the state information acquired by the acquisition unit.

Still another invention is a detection device including: a detection unit configured to detect an object situated in surroundings of a vehicle; an acquisition unit configured to acquire from an external device a record with a data structure including a position information field indicative of information associated with a position of a feature and a detection-related information indicative of information associated with a detection of the feature; an identification unit configured to identify the object detected by the detection unit as the feature based on the information associated with the position of the feature; and a transmission unit configured to send to the external device state information which includes information associated with at least one of, at a time when an identification of the feature by the identification unit succeeds or fails, a state of the vehicle, a state of surroundings of the vehicle and a state of the detection unit, wherein the detection unit changes a configuration associated with a detection of the object based on the information associated with the detection of the feature.

### BRIEF DESCRIPTION OF THE DRAWINGS

FIG. 1 illustrates a schematic configuration of an advanced map system.
FIG. 2A illustrates a block diagram illustrating a functional configuration of a vehicle mounted device.
FIG. 2B illustrates a block diagram illustrating a functional configuration of a server device.
FIG. 3 is a functional block diagram illustrating the functional relationship between the vehicle mounted device and the server device.
FIG. 4 is an example of the data structure of feature information.
FIG. 5A is a data structure of the field "SENSOR ATTRIBUTE" for a LIDAR.
FIG. 5B is a data structure of the field "SENSOR ATTRIBUTE" for a camera.
FIG. 6 illustrates a data structure of condition information.
FIG. 7 illustrates an example of a flowchart indicative of the procedure of the process executed by the vehicle mounted device.
FIG. 8 illustrates an example of a flowchart indicative of the procedure of the process executed by the server device.

### DETAILED DESCRIPTION OF THE PREFERRED EMBODIMENTS

According to a preferable embodiment of the present invention, there is provided a feature data structure regarding a feature including a detection-related information field configured to include configuration information or environmental information which are related to detection of the feature, the detection-related information field being updatable based on a detection result by a detection device which detects the feature. The term" feature" herein includes any natural or artificial objects on the earth such as a tree, river, a house, a road and a railway. According to this mode, a feature data structure regarding a feature includes a detection-related information field configured to include configuration information or environmental information which are related to detection of the feature. The detection-related information field is updatable based on a detection result by a detection device which detects the feature. According to this mode, the feature data structure can updatably store the configuration information and the environmental information which are useful for feature detection and enable a device which refers to data of the feature data structure to suitably detect the feature.

In one mode of the feature data structure, the detection-related information field is updated by a server device which statistically analyzes detection results by detection devices mounted on vehicles. According to this mode, the detection-related information field is suitably updated by the server device based on statistical analysis on the detection result by a detection device.

In another mode of the feature data structure, the detection-related information field is provided with respect to each type of the detection device . This mode enables the detection device to refer to the configuration information and the environmental information appropriate for the type of the detection device and to perform the detection of the feature. According to a preferable example of the feature data structure, the detection-related information, with respect to each type of the detection device, includes a subfield indicative of the configuration information or the environmental information which are related to the detection of the feature.

In still another mode of the feature data structure, the subfield includes at least one of a time slot of day and weather conditions in which a detection rate of the feature by each type of the detection device is equal to or higher than a predetermined value or the detection rate is lower than a predetermined value. According to this mode, by referring to a record with the feature data structure, the detection device can suitably understand whether or not the present detection state falls under the time slot or the weather appropriate (or inappropriate) for detection of the target feature.

In still another mode of the feature data structure, the subfield includes information indicative of a spatial range regarding the feature in which a detection rate of the feature by each type of the detection device is equal to or higher than a predetermined value or the detection rate is lower than a predetermined value. According to this mode, by referring to a record with the feature data structure, the detection device can efficiently detect the feature by identifying a portion of the target feature where the detection is easy or difficult.

In still another mode of the feature data structure, the feature data structure includes a position information field indicative of information associated with a position of the feature and an attribute information field indicative of information associated with an attribute of the feature, wherein the detection device detects the feature based on the information associated with the position of the feature and the information associated with the attribute of the feature. According to this mode, the detection device identifies the position and the attribute of the feature with reference to a record with the feature data structure to thereby detect the feature with a high degree of accuracy.

In a preferable example, a storage medium stores a record with the feature data structure.

According to still another preferable embodiment of the present invention, there is provided an information processing device including: a storage unit configured to store a record with a feature data structure regarding a feature, the feature data structure including a detection-related information field configured to include configuration information or environmental information which are related to detection of the feature, the detection-related information field being updatable based on a detection result by a detection device which detects the feature, the detection device being mounted on a vehicle; an acquisition unit configured to acquire state information which includes information associated with at least one of, at a time when a detection of the feature by the detection device succeeds or fails, a state of the vehicle, a state of surroundings of the vehicle and a state of the detection device; and an update unit configured to update the detection-related information field based on the state information acquired by the acquisition unit. According to this mode, the information processing device can suitably update the content of the detection-related information field of a record with the feature data structure.

In one mode of the information processing device, it acquires a plurality of the state information associated with a feature sent from vehicles, and wherein the update unit determines an updated content of the detection-related information field corresponding to the feature by statistically analyzing the plurality of the state information. According to this mode, by statistically analyzing the state information sent from vehicles, the information processing device can suitably update the content of the detection-related information field of a record with the feature data structure.

According to another preferable embodiment of the present invention, there is provided a detection device including: a detection unit configured to detect an object situated in surroundings of a vehicle; an acquisition unit configured to acquire from an external device a record with a data structure including a position information field indicative of information associated with a position of a feature and a detection-related information indicative of information associated with a detection of the feature; an identification unit configured to identify the object detected by the detection unit as the feature based on the information associated with the position of the feature; and a transmission unit configured to send to the external device state information which includes information associated with at least one of, at a time when an identification of the feature by the identification unit succeeds or fails, a state of the vehicle, a state of surroundings of the vehicle and a state of the detection unit, wherein the detection unit changes a configuration associated with a detection of the object based on the information associated with the detection of the feature. According to this mode, the detection device includes the detection unit, the acquisition unit, the identification unit and the transmission unit. The detection device sends to the external device the state information at the time of identifying (includes falsely identifying) the object detected by the detection unit as the feature. In addition, the detection device changes a configuration associated with a detection of the object based on the information associated with the detection of the feature indicated by the detection-related information field. According to this mode, the detection device can determine a configuration associated with feature detection based on a record acquired from an external device while suitably supplying the external device with state information needed to update the record which has the data structure including the detection-related information field.

In one mode of the detection device, the detection-related information includes a subfield indicative of a detection condition in which a success rate of detecting the feature is equal to or higher than a predetermined value, and wherein the detection unit changes a range of a detection area by the detection unit based on the detection condition in which the success rate of detecting the feature is equal to or higher than the predetermined value. According to this mode, the detection device can determine the range of the detection area based on the detection condition in which a success rate of detecting the feature is high.

In another mode of the detection device, the detection-related information includes a subfield indicative of a detection condition in which a success rate of detecting the feature is lower than a predetermined value, and wherein the detection unit omits the feature from a target of a detection if a state of the vehicle, a state of surroundings of the vehicle or a state of the detection unit satisfies the detection condition in which the success rate of detecting the feature is lower than the predetermined value. According to this mode, the detection device can suitably suppress execution of the feature detection process under the circumstances where the detection is likely to fail.

According to still another preferable embodiment of the present invention, there is provided a control method executed by an information processing device which refers to a storage unit configured to store a record with a feature data structure regarding a feature, the feature data structure including a detection-related information field configured to include configuration information or environmental information which are related to detection of the feature, the detection-related information field being updatable based on a detection result by a detection device which detects the feature, the detection device being mounted on a vehicle, the control method including: an acquisition process to acquire state information which includes information associated with at least one of, at a time when a detection of the feature by the detection device succeeds or fails, a state of the vehicle, a state of surroundings of the vehicle and a state of the detection device; and an update process to update the detection-related information field based on the state information acquired in the acquisition process. By executing the control method, the information processing device can suitably update the content of the detection-related information field of a record with the feature data structure.

According to still another preferable embodiment of the present invention, there is provided a program executed by a computer which refers to a storage unit configured to store a record with a feature data structure regarding a feature, the feature data structure including a detection-related information field configured to include configuration information or environmental information which are related to detection of the feature, the detection-related information field being updatable based on a detection result by a detection device which detects the feature, the detection device being mounted on a vehicle, the control method including: an acquisition unit configured to acquire state information which includes information associated with at least one of, at a time when a detection of the feature by the detection device succeeds or fails, a state of the vehicle, a state of surroundings of the vehicle and a state of the detection device; and an update unit configured to update the detection-related information field based on the state information acquired by the acquisition unit. By executing the program, the computer can suitably update the content of the detection-related information field of a record with the feature data structure.

According to still another preferable embodiment of the present invention, a control method executed by a detection device including: a detection process to detect an object situated in surroundings of a vehicle; an acquisition process to acquire from an external device a record with a data structure including a position information field indicative of information associated with a position of a feature and a detection-related information indicative of information associated with a detection of the feature; an identification process to identify the object detected by the detection process as the feature based on the information associated with the position of the feature; and a transmission process to send to the external device state information which includes information associated with at least one of, at a time when an identification of the feature by the identification process succeeds or fails, a state of the vehicle, a state of surroundings of the vehicle and a state of the detection device, wherein the detection process changes a configuration associated with a detection of the object based on the information associated with the detection of the feature. By executing the control method, the detection device can determine a configuration associated with feature detection based on a record acquired from an external device while suitably supplying the external device with state information needed to update the record which has the data structure including the detection-related information field.

According to still another preferable embodiment of the present invention, there is provided a program executed by a computer, the program making the computer function as: a detection unit configured to detect an object situated in surroundings of a vehicle; an acquisition unit configured to acquire from an external device a record with a data structure including a position information field indicative of information associated with a position of a feature and a detection-related information indicative of information associated with a detection of the feature; an identification unit configured to identify the object detected by the detection unit as the feature based on the information associated with the position of the feature; and a transmission unit configured to send to the external device state information which includes information associated with at least one of, at a time when an identification of the feature by the identification unit succeeds or fails, a state of the vehicle, a state of surroundings of the vehicle and a state of the detection unit, wherein the detection unit changes a configuration associated with a detection of the object based on the information associated with the detection of the feature. By executing the program, the computer can determine a configuration associated with feature detection based on a record acquired from an external device while suitably supplying the external device with state information needed to update the record which has the data structure including the detection-related information field.

### EMBODIMENT

Now, a preferred embodiment of the present invention will be described below with reference to the attached drawings.

### [System Configuration]

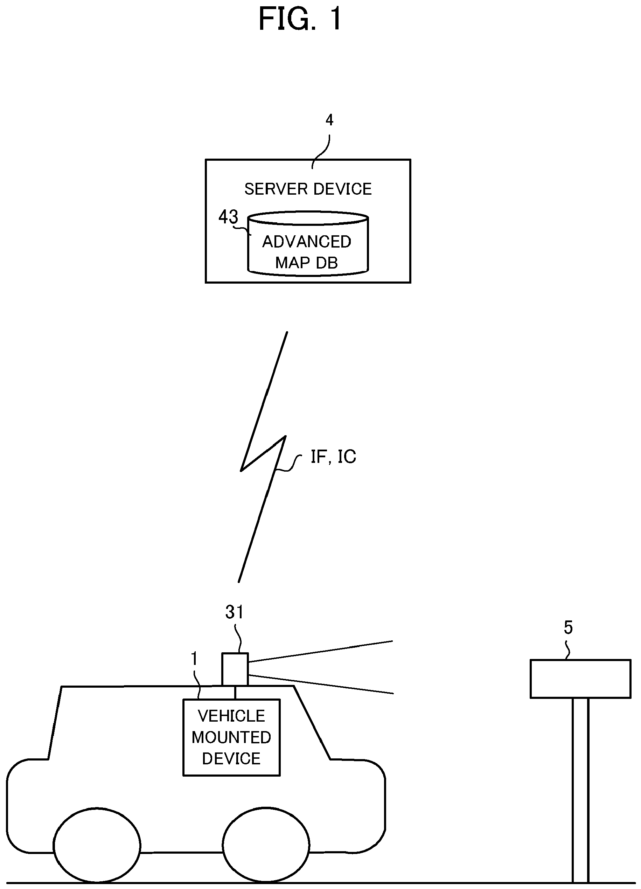

FIG. 1 illustrates a schematic configuration of an advanced map system according to the embodiment. The advanced map system includes a vehicle mounted device 1 equipped with external sensor (s) 31 and a server device 4 which stores advanced map DB 43. Then, the advance map system automatically generates configuration information and the like which are necessary to precisely detect a feature (signboard 5 in case of FIG. 1) on or around a road by various kinds of external sensor(s).

The vehicle mounted device 1 includes one or more external sensors 31 such as a LIDAR (Light Detection and Ranging, or Laser Illuminated Detection and Ranging) and a camera and estimates the own vehicle position and pose with a high degree of accuracy based on the output of the external sensor(s) 31.

The vehicle mounted device 1 according to the embodiment sends a predetermined request signal including own vehicle position information, which is generated based on the output of a GPS receiver to be mentioned later, to the server device 4 to thereby receive from the server device 4 information (referred to as "feature information IF") associated with a feature situated around the own vehicle position. As is mentioned later, the feature information IF includes information associated with an attribute (referred to as "sensor attribute") of an external sensor 31 suitable/unsuitable to detect the feature indicated by the feature information IF. Then, at the time of detecting a target feature of detection through an external sensor 31, the vehicle mounted device 1 detects the feature by controlling the external sensor 31 based on the received feature information IF. Then, the vehicle mounted device 1 sends information (referred to as "condition information IC") associated with the conditions of detecting the feature by the external sensor 31 to the server device 4. As is mentioned below, the condition information IC includes not only information on whether or not the detection of the target feature succeeds but also information associated with environment of the detection of the target feature and its configuration information (i.e., parameter information) of the external sensor 31. It is noted that, although only one vehicle mounted device 1 is illustrated in FIG. 1 for the sake of convenience, multiple vehicle mounted devices 1 mounted on vehicles on roads actually exchange the feature information IF and the condition information IC with the server device 4. The vehicle mounted device 1 is an example of the "detection device" according to the present invention.

The server device 4 stores the advanced map DB 43 including feature information IF corresponding to each of features situated on or around roads. At the time of receiving from the vehicle mounted device 1 a request signal for requesting the feature information IF, on the basis of the position information of the vehicle mounted device 1 included in the request signal, the server device 4 extracts from the advanced map DB 43 the feature information IF corresponding to feature (s) situated around the vehicle mounted device 1 and thereafter sends the extracted feature information IF to the vehicle mounted device 1. Examples of features registered as the feature information IF on the advanced map DB 43 include not only periodically arranged features along a road such as a mile marker, a hundred-meter post, a delineator, a traffic infrastructure (e.g., asignage, a direction signboard and a traffic signal), a utility pole and a street lamp but also a natural feature such as a tree. The server device 4 stores the condition information IC sent from vehicle mounted devices 1 and statistically analyzes the stored condition information IC to thereby update the sensor attributes included in the feature information IF registered in the advanced map DB 43. The server device 4 is an example of the "information processing device" according to the present invention.

### [Configuration of Vehicle Mounted Device and Server Device]

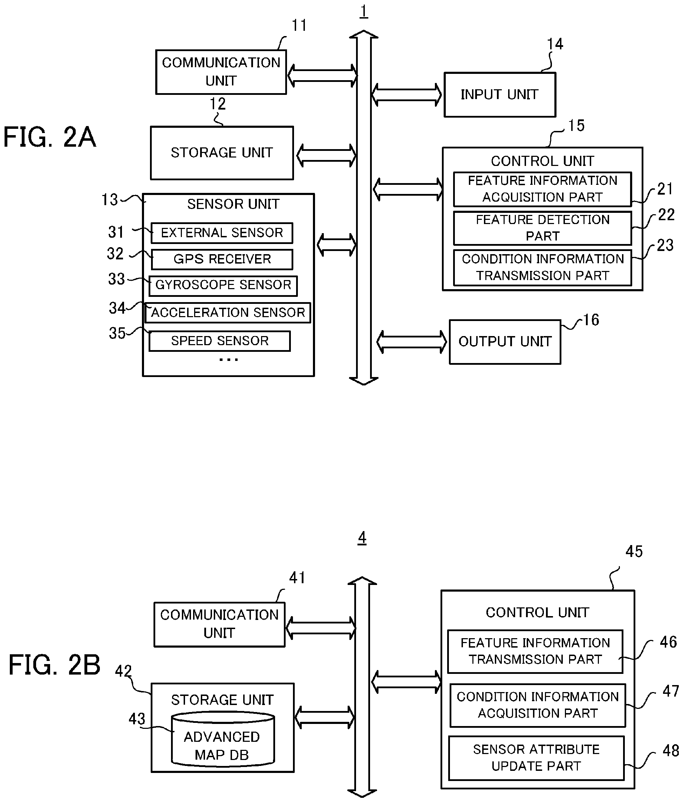

FIG. 2A is a block diagram illustrating a functional configuration of the vehicle mounted device 1. The vehicle mounted device 1 mainly includes a communication unit 11, a storage unit 12, a sensor unit 13, an input unit 14, a control unit 15 and an output unit 16. These elements are connected to each other via a bus line.

Under the control of the control unit 15, the communication unit 11 exchanges data with the server device 4. The storage unit 12 stores a program to be executed by the control unit 15 and information necessary for the control unit 15 to execute a predetermined processing. For example, the storage unit may store the feature information IF received from the server device 4 and/or map data including the feature information IF.

The sensor unit 13 is configured of one or more external sensors 31 for recognizing the peripheral environment of the vehicle, a GPS receiver 32, a gyroscope sensor 33, acceleration sensor 34 and a speed sensor 35. The output configuration(setting)of the external sensors 31 according to the embodiment is configured to be adjustable under the control of the control unit 15. For example, in cases that an external sensor 31 is a LIDAR, the external sensor 31 is configured so that the peak power of laser pulses emitted by the external sensor 31, the pulse period (i.e., laser pulse density) of repeatedly-emitted laser pulses and the laser emitting angle range that is an angle range of the laser pulse emission are adjustable under the control of the control unit 15, respectively. In another example, in cases that an external sensor 31 is a camera, the external sensor 31 is configured so that the frame rate, the resolution, the angle of view, the sensitivity and the exposure thereof are adjustable under the control of the control unit 15, respectively.

Examples of the input unit 14 include a button, a touch panel, a remote controller and an audio input device for user operations . The output unit 16 includes a display and/or a speaker which output under the control of the control unit 15.

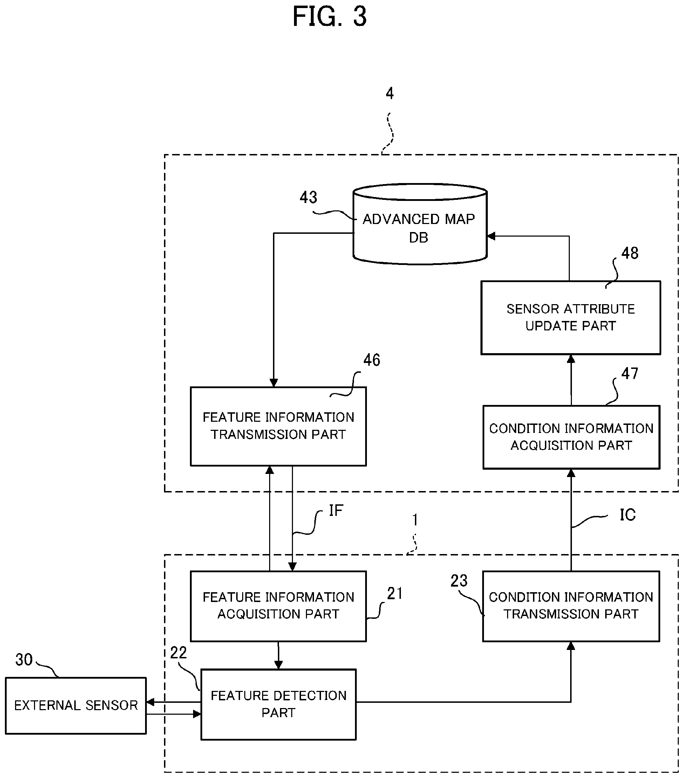

The control unit 15 includes a CPU for executing programs and controls the entire vehicle mounted device 1. The control unit 15 predicts the own vehicle position based on the output of the GPS receiver 32, the gyroscope sensor 33 and the acceleration sensor 34. Furthermore, the control unit 15 calculates the position information on a feature situated around the own vehicle position by using an external sensor 31 and compares the calculated position information with the position information indicated by the feature information IF corresponding to the target feature of detection to thereby correct the predicted own vehicle position. Accordingly, the control unit 15 acquires the accurate own vehicle position to be used for autonomous driving and the like. The control unit 15 according to the embodiment performs processing for detecting the feature with a high degree of accuracy, and functionally includes a feature information acquisition part 21, a feature detection part 22 and a condition information transmission part 23. These elements are to be explained later with reference to FIG. 3.

FIG. 2B is a block diagram illustrating a functional configuration of the server device 4. The server device 4 mainly includes a communication unit 41, a storage unit 42 and a control unit 45. These elements are connected to each other via a bus line.

The communication unit 41 exchanges data with the vehicle mounted devices 1 under the control of the control unit 45. The storage unit 42 stores a program to be executed by the control unit 45 and information necessary for the control unit 45 to execute a predetermined processing. According to the embodiment, the storage unit 42 stores the advanced map DB 43. The advanced map DB 43 includes the feature information IF corresponding to each feature that is subject to detection by the external sensor 31 of the vehicle mounted device 1. For example, the initial fields of the sensor attributes of the feature information IF corresponding to each feature registered in the advanced map DB 43 are null and are updated through statistical analysis of the condition information IC by the control unit 45. The detail of the data structure of the feature information IF will be explained in the section "Data Structure". The storage unit 42 is an example of the "storage medium" according to the present invention.

The control unit 45 includes a CPU for executing programs and controls the entire server device 4. According to the embodiment, the control unit 45 functionally includes a feature information transmission part 46, a condition information acquisition part 47 and a sensor attribute update part 48.

FIG. 3 is a functional block diagram illustrating the functional relationship between the vehicle mounted device 1 and the server device 4.

The feature information acquisition part 21 predicts the own vehicle position based on the output of the GPS receiver 32, the gyroscope sensor 33 and the acceleration sensor 34 and sends to the server device 4 via the communication unit 11 a request signal that includes the information on the predicted own vehicle position and that requests the feature information IF. In this case, for example, at the time of determining that the feature information acquisition part 21 has not acquired the feature information IF corresponding to the vicinity of the predicted own vehicle from the server device 4 yet, the feature information acquisition part 21 sends the above request signal to the server device 4 via the communication unit 11. Then, at the time of receiving the feature information IF from the server device 4, the feature information acquisition part 21 supplies the received feature information IF to the feature detection part 22. The feature information acquisition part 21 is an example of the "acquisition unit" according to the present invention and the feature information IF is an example of the "record" according to the present invention.

On the basis of feature information IF corresponding to at least one of the features corresponding to the received feature information IF, the feature detection part 22 detects a feature. In this case, for example, the feature detection part 22 extracts from the feature information IF the sensor attribute corresponding to the external sensor 31 to be used for detection of the feature. As is mentioned below, the feature information IF includes configuration information (e.g., for a LIDAR, information associated with parameter (s) such as laser power and laser pulse density) that is applied to the external sensor 31 at the time of a high detection rate in statistics. Thus, for example, the feature detection part 22 sends, to the external sensor 31 to be used for detection of the feature, a control signal for applying the configuration that is included in the target sensor attribute of reference and that leads to a high detection rate in statistics, thereby configuring the external sensor 31 to suit the detection of the target feature. Then, on the basis of the output signal received from the external sensor 31 after the configuration based on the feature information IF, the feature detection part 22 acquires or calculates three-dimensional position information (including point cloud information) of the feature. Then, the feature detection part 22 compares the acquired/calculated position information with the position information of the feature included in the target feature information IF to determine whether or not the detection of the feature succeeds. Thereafter, the feature detection part 22 supplies the condition information transmission part 23 with the information on whether or not the detection of the feature succeeds, the configuration information on the external sensor 31 used for the detection of the feature and environmental information indicative of time and/or weather at the time of the detection of the feature.

It is noted that, in cases where each subfield of the sensor attribute to be referred to remains the initial state indicative of null, the feature detection part 22 detects the feature without using the sensor attribute. In this case, for example, the feature detection part 22 may set each parameter of the external sensor 31 to be used to detect the feature to a predetermined standard configuration value or may determine each parameter of the external sensor 31 to be used to detect the feature on a random basis. The feature detection part 22 is an example of the "detection unit" and "identification unit" according to the present invention.

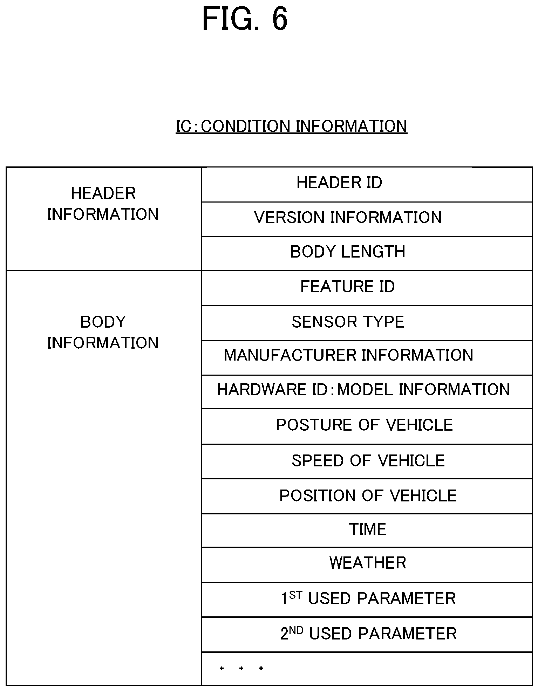

On the basis of the information received from the feature detection part 22, the condition information transmission part 23 generates the condition information IC and sends the condition information IC to the server device 4 via the communication unit 11. It is noted that the condition information transmission part 23 may send the condition information IC every time detecting the feature or at the time when the condition information IC is stored to some extent. As is mentioned below, the condition information IC includes information on the position, posture and speed of the vehicle, information on whether or not the feature detection succeeds and configuration information that was applied to the external sensor 31 at the feature detection. The data structure of the condition information IC and approach for generating the condition information IC will be explained later with reference to FIG. 6. The condition information transmission part 23 is an example of the "transmission unit" according to the present invention and the condition information IC is an example of the "state information" according to the present invention.

When the communication unit 41 receives the request signal for requesting the feature information IF from the vehicle mounted device 1, the feature information transmission part 46 extracts the feature information IF in the vicinity of the vehicle mounted device 1, for example, by comparing the position information of the vehicle mounted device 1 included in the request signal with the position information of features included in each feature information IF registered in the advanced map DB 43. Then, the feature information transmission part 46 sends the extracted feature information IF to the vehicle mounted device 1 via the communication unit 41.

The condition information acquisition part 47 receives from the communication unit 41 the condition information IC sent from each vehicle mounted device 1 mounted on vehicles that are traveling on roads and stores the condition information IC on the storage unit 42. The condition information acquisition part 47 is an example of the "acquisition unit" according to the present invention.

The sensor attribute update part 48 updates sensor attributes of the feature information IF registered in the advanced map DB 43 through statistical analysis on the condition information IC sent from the vehicle mounted devices 1.

### [Data Structure]

Next, a specific description will be given of the data structure of the feature information IF and the condition information IC.

### (1) Feature Information

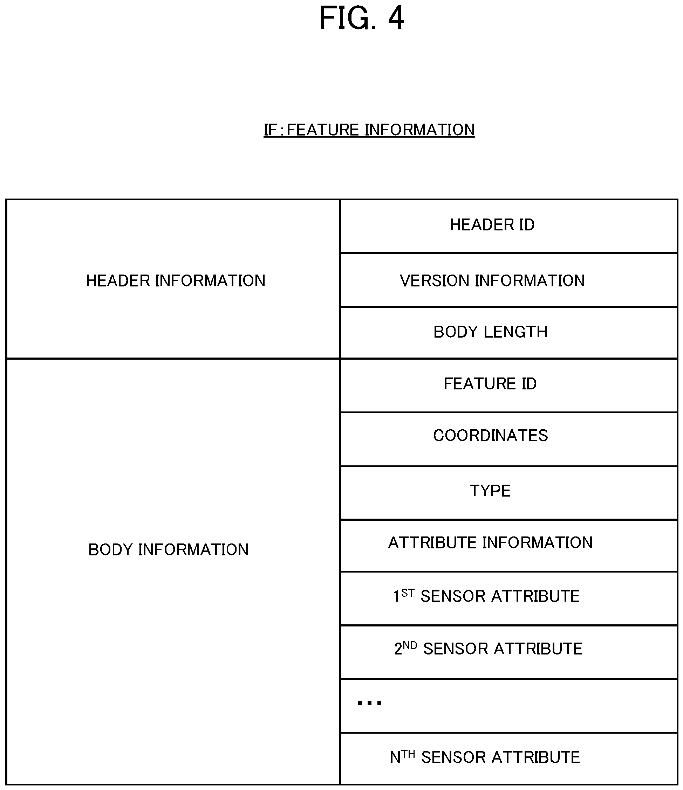

FIG. 4 is an example of the data structure (feature data structure) of the feature information IF. The feature information IF illustrated in FIG. 4 includes header information and body information. The header information includes each field corresponding to "HEADER ID", "VERSION INFORMATION" and "BODY LENGTH". In the field "HEADER ID", identification information to identify that the corresponding body information is associated with a feature is registered. In the field "VERSION INFORMATION", the version of the data structure of the body information is registered. In the field "BODY LENGTH", the data size of the body information is registered.

The body information includes each field corresponding to "FEATURE ID", "COORDINATES", "TYPE", "ATTRIBUTE INFORMATION" and multiple (herein N fields) "SENSOR ATTRIBUTE". In the field "FEATURE ID", the identification information of the feature that is allocated to the feature uniquely in the advanced map DB 43 is registered. In the field "COORDINATES", coordinates (e.g., longitude, latitude and altitude) that represents the position of the feature are registered. In the field "TYPE", the type of the feature is registered. For example, in the field "TYPE", information that indicates a road sign (including a marker, a poll and a direction signboard), a traffic signal (including traffic lights for vehicles, traffic lights for pedestrians and an automatic barrier), an installation (including a utility pole, a street lamp, a guardrail, a tunnel and a bridge), a facility (including a building and an advertising display) and an artificial object (including a tree and a rock) is registered. In the field "ATTRIBUTE INFORMATION", general attribute (s) of the feature are registered. Information to be registered in the field "ATTRIBUTE INFORMATION" varies depending on the type of the feature. For example, in cases where the target feature is a road sign, information associated with type of the road sign (e.g., traffic regulation and speed regulation), the direction of the display surface of the road sign and/or the size of the road sign is registered. The field "COORDINATES" is an example of the "position information field" according to the present invention. The file "ATTRIBUTE INFORMATION" is an example of the "attribute information field" according to the present invention.

In the fields "SENSOR ATTRIBUTE", there are registered configuration information (i.e., parameter information) of the external sensor 31 inductive of suitable/unsuitable configuration at the time of detecting the target feature and environmental information relating to the detection environment. The field "SENSOR ATTRIBUTE" is provided for each type of the external sensors 31 and is registered or updated through statistical analysis on the condition information IC by the server device 4. Each field "SENSOR ATTRIBUTE" is an example of the "detection-related information field" according to the present invention.

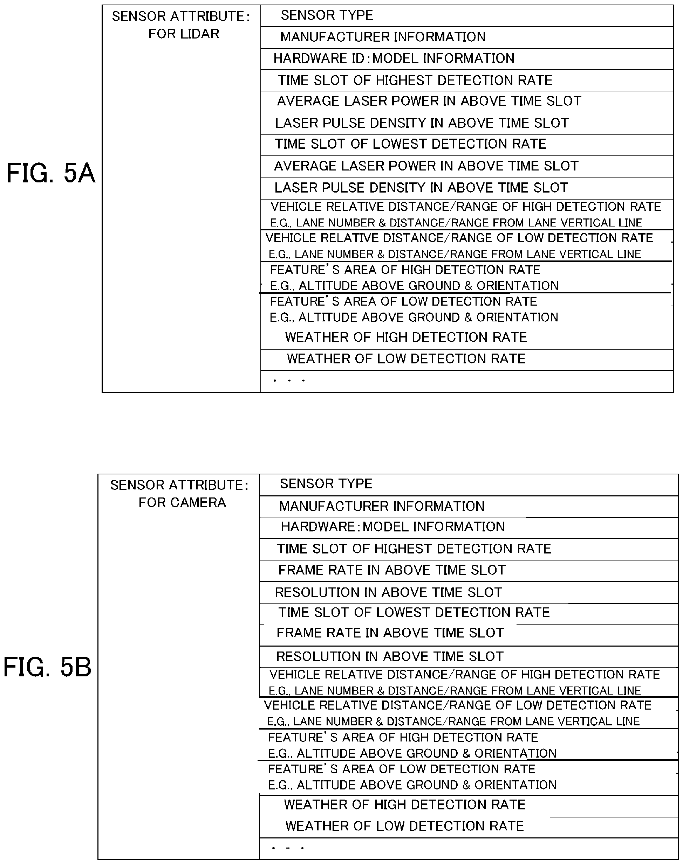

FIG. 5A is a data structure of the field "SENSOR ATTRIBUTE" for a LIDAR and FIG. 5B is a data structure of the field "SENSOR ATTRIBUTE" for a camera. As illustrated in FIGS. 5A and 5B, multiple subfields relating to configuration information of the target external sensor and environmental information associated with the detection environment are provided in the field "SENSOR ATTRIBUTE" such as "SENSOR TYPE", "MANUFACTURER INFORMATION" and "HARDWARE ID" . These subfields are initially set to null or standard values and are updated as necessary through statistical analysis on the condition information IC by the server device 4, respectively.

First, a description will be given of contents of each subfield in the field "SENSOR ATTRIBUTE" for a LIDAR illustrated in FIG. 5A and the usage thereof by the vehicle mounted device 1.

In the subfield "SENSOR TYPE", information indicative of the type (a LIDAR herein) of the target external sensor 31 is registered. In the subfield "MANUFACTURER INFORMATION", information indicative of the manufacturer of the target external sensor 31 is registered. In the subfield "HARDWARE ID", information to identify the model of the target external sensor 31 is registered. By referring to these subfields, the vehicle mounted device 1 extracts, from multiple (four in FIG. 4) fields "SENSOR ATTRIBUTE" registered in the feature information IF, an appropriate field "SENSOR ATTRIBUTE" corresponding to the external sensor 31 to be used to detect the feature.

In the subfield "TIME SLOT OF HIGHEST DETECTION RATE" or "TIME SLOT OF LOWEST DETECTION RATE", there is registered a time slot of day (into which the range of time from 0 o'clock to 24 o'clock is divided per one hour, for example) when the target feature is detected at the highest or lowest success rate (detection success rate) .

Generally, for feature detection by LIDAR, for example, in such a time slot that traffic jams occur, the feature detection tends to fail since other vehicles situated within the laser emitting range become obstacles. Similarly, in such a time slot that the feature detection is conducted against the sun (e.g., sunset), the detection success rate of the feature is likely to be low.

In response to the above issue, as a first example, the vehicle mounted device 1 conducts the detection process of the target feature by LIDAR only when the present time matches the time slot indicated by the subfield "TIME SLOT OF HIGHEST DETECTION RATE" in the sensor attributes in FIG. 5A to which the vehicle mounted device 1 refers. In this case, the vehicle mounted device 1 can detect the feature only when the feature detection with a high degree of accuracy is expected. In the second example, the vehicle mounted device 1 conducts the detection process of the target feature by LIDAR only when the present time is a time slot other than the time slot indicated by the subfield "TIME SLOT OF LOWEST DETECTION RATE". Accordingly, the vehicle mounted device 1 can suitably prevent the feature detection which is likely to fail from being unnecessarily conducted.

The subfields "AVERAGE LASER POWER IN ABOVE TIME SLOT" and "LASER PULSE DENSITY IN ABOVE TIME SLOT" are provided for each of the subfields "TIME SLOT OF HIGHEST DETECTION RATE" and "TIME SLOT OF LOWEST DETECTION RATE". In the subfields "AVERAGE LASER POWER IN ABOVE TIME SLOT" and "LASER PULSE DENSITY IN ABOVE TIME SLOT", the average laser power and the average laser pulse density of the LIDAR at the time of detection of the feature are registered, respectively. For example, in cases where the present time matches the time slot indicated by the subfield "TIME SLOT OF HIGHEST DETECTION RATE", the vehicle mounted device 1 detects the feature by configuring the LIDAR with the laser power indicated by the corresponding subfield "AVERAGE LASER POWER IN ABOVE TIME SLOT" and with the laser pulse density indicated by the corresponding subfield "LASER PULSE DENSITY IN ABOVE TIME SLOT". Thereby, the vehicle mounted device 1 prevents the laser power and the laser pulse density of the LIDAR at the time of detection of the feature from being unnecessarily high and reduces the power consumption. In another example, in cases where the present time matches the time slot indicated by the subfield "TIME SLOT OF LOWEST DETECTION RATE", the vehicle mounted device 1 determines that it is necessary to raise the accuracy of the LIDAR to successfully detect the feature by the LIDAR. Thus, in this case, the vehicle mounted device 1 detects the feature by configuring the LIDAR with a laser power higher than the laser poser indicated by the corresponding subfield "AVERAGE LASER POWER IN ABOVE TIME SLOT" and with a laser pulse density higher than the laser pulse density indicated by the corresponding subfield "LASER PULSE DENSITY IN ABOVE TIME SLOT".

In the subfield "VEHICLE RELATIVE DISTANCE/RANGE OF HIGH DETECTION RATE", the relative distance between the vehicle and the feature at the time when the detection rate of the feature is equal to or higher than a predetermined rate is registered. In this case, for example, in the subfield "VEHICLE RELATIVE DISTANCE/RANGE OF HIGH DETECTION RATE", a combination of the lane number indicative of a lane where the vehicle exists at the time of detecting the feature and the range of the distance between the vehicle and the feature in the vertical direction of the lane. Similarly, in the subfield "VEHICLE RELATIVE DISTANCE/RANGE OF LOW DETECTION RATE", the relative distance between the vehicle and the feature at the time when the detection rate of the feature is lower than a predetermined rate is registered. For example, in cases where the vehicle mounted device 1 refers to the sensor attribute indicated by FIG. 5A, the vehicle mounted device 1 performs the detection process of the target feature only when the relative distance to the target feature is within the range of the relative distance indicated by the subfield "VEHICLE RELATIVE DISTANCE/RANGE OF HIGH DETECTION RATE". In another example, the vehicle mounted device 1 performs the detection process of the target feature in such a case that the relative distance to the target feature is out of the range of the relative distance indicated by the subfield "VEHICLE RELATIVE DISTANCE/RANGE OF LOW DETECTION RATE".

In the subfield "FEATURE'S AREA OF HIGH DETECTION RATE", information indicative of the surface area of the feature detected at a detection rate equal to or higher than a predetermined rate is registered. For example, in the subfield "FEATURE'S AREA OF HIGH DETECTION RATE", information indicative of the altitude from the ground and the direction of the area detected at the detection rate equal to or higher than the predetermined rate. Similarly, in the subfield "FEATURE'S AREA OF LOW DETECTION RATE", information indicative of the target surface area of the feature detected at a detection rate lower than a predetermined rate is registered. For example, the vehicle mounted device 1 determines only the area indicated by the subfield "FEATURE'S AREA OF HIGH DETECTION RATE" as the target area of the feature to be detected of by the LIDAR. Thereby, the vehicle mounted device 1 can efficiently detect the feature. Similarly, the vehicle mounted device 1 may omit the area indicated by the subfield "FEATURE'S AREA OF LOW DETECTION RATE" from the target area of the feature to be detected by the LIDAR. The area indicated by the subfield "FEATURE'S AREA OF HIGH DETECTION RATE" is an example of the "spatial range" according to the present invention.

In the subfield "WEATHER OF HIGH DETECTION RATE", information indicative of weather in which the feature is detected at a detection rate equal to or higher than a predetermined rate is registered. In the subfield "WEATHER OF LOW DETECTION RATE", information indicative of weather in which the feature is detected at a detection rate lower than a predetermined rate is registered. For example, the vehicle mounted device 1 performs detection process of the feature by the LIDAR only when the present weather matches the weather indicated by the subfield "WEATHER OF HIGH DETECTION RATE" . In this case, the vehicle mounted device 1 can detect the feature by the LIDAR only when the feature detection with a high degree of accuracy is expected. In another example, the vehicle mounted device 1 performs detection process of the feature by the LIDAR only when the present weather does not match the weather indicated by the subfield "WEATHER OF LOW DETECTION RATE" . Thereby, the vehicle mounted device 1 can suitably prevent the feature detection by the LIDAR under the circumstances that the feature detection is likely to fail from being unnecessarily conducted.

It is noted that each of the subfields "TIME SLOT OF HIGHEST DETECTION RATE", "VEHICLE RELATIVE DISTANCE/RANGE OF HIGH DETECTIONRATE", "FEATURE'S AREAOFHIGHDETECTIONRATE" and "WEATHER OF HIGH DETECTION RATE" is an example of the "subfield indicative of a detection condition in which a success rate of detecting the feature is equal to or higher than a predetermined value" according to the present invention. Each of the subfields "TIME SLOT OF LOWEST DETECTION RATE", "VEHICLE RELATIVE DISTANCE/RANGE OF LOW DETECTION RATE", "FEATURE'S AREA OF LOW DETECTION RATE" and "WEATHER OF LOW DETECTION RATE" is an example of the "subfield indicative of a detection condition in which a success rate of detecting the feature is lower than a predetermined value" according to the present invention.

Next, a description will be given of the field "SENSOR ATTRIBUTE" for a camera illustrated in FIG. 5B.

As illustrated in FIG. 5B, the field "SENSOR ATTRIBUTE" for a camera includes subfields "SENSOR TYPE", "MANUFACTURER INFORMATION", "HARDWARE ID", "TIME SLOT OF HIGHEST DETECTION RATE", "FRAME RATE IN ABOVE TIME SLOT", "RESOLUTION IN ABOVE TIME SLOT", "TIME SLOT OF LOWEST DETECTION RATE", "FRAME RATE IN ABOVE TIME SLOT", "RESOLUTION IN ABOVE TIME SLOT", "VEHICLE RELATIVE DISTANCE/RANGE OF HIGH DETECTION RATE", "VEHICLE RELATIVE DISTANCE/RANGE OF LOW DETECTION RATE", "FEATURE'S AREA OF HIGH DETECTION RATE", "FEATURE'S AREA OF LOW DETECTION RATE", "WEATHER OF HIGH DETECTION RATE" and "WEATHER OF LOW DETECTION RATE".

In the field "SENSOR ATTRIBUTE" for a camera, there are provided subfields "FRAME RATE IN ABOVE TIME SLOT" and "RESOLUTION IN ABOVE TIME SLOT" that are characteristic items of cameras instead of the subfields "AVERAGE LASER POWER IN ABOVE TIME SLOT" and "LASER PULSE DENSITY IN ABOVE TIME SLOT" provided in the field "SENSOR ATTRIBUTE" for a LIDAR. In the subfields "FRAME RATE IN ABOVE TIME SLOT" and "RESOLUTION IN ABOVE TIME SLOT", the average frame rate of the camera and the average resolution thereof at the time of detecting the feature in the time slot indicated by the corresponding subfields "TIME SLOT OF HIGHEST DETECTION RATE" or "TIME SLOT OF LOWEST DETECTION RATE" are registered, respectively. Other subfields are included in the subfields that were already explained by use of FIG. 5A and the same contents as the contents that were already explained in FIG. 5A are registered in the subfields.

As is mentioned above, in the body information of the feature information IF, configuration information and information relating to the environment corresponding to each type of external sensors that are expected to be used for feature detection are registered. Thus, by referring to the sensor attribute corresponding to the external sensor 31 to be used for detection of a target feature, the vehicle mounted device 1 can accurately perform the detection process of the target feature.

### (2) Condition Information

FIG. 6 illustrates a data structure of the condition information IC. The condition information IC illustrated in FIG. 6 includes header information and body information. The header information includes fields "HEADER ID", "VERSION INFORMATION" and "BODY LENGTH". In the field "HEADER ID", information to identify whether the corresponding body information is information generated at the time of successfully detecting the feature or information generated at the time of falsely detecting the feature is registered. Thus, in cases of sending the condition information IC to the server device 4 at the time of successfully detecting the feature, the vehicle mounted device 1 registers, in the field "HEADER ID", information to identify that the corresponding body information is generated for success detection of the feature. In contrast, in cases of sending the condition information IC to the server device 4 at the time of falsely detecting the feature, the vehicle mounted device 1 registers, in the field "HEADER ID", information to identify that the corresponding body information is generated for false detection of the feature. In the field "VERSION INFORMATION", the version of the data structure of the body information is registered. In the field "BODY LENGTH", the data size of the body information is registered.

The body information is information indicative of either the state of the vehicle equipped with the vehicle mounted device 1 that detects the feature or the state of the external sensor 31. The body information includes fields "FEATURE ID", "SENSOR TYPE", "MANUFACTURER INFORMATION", "HARDWARE ID", "POSTURE OF VEHICLE", "SPEED OF VEHICLE", "POSITION OF VEHICLE", "TIME", "WEATHER" and multiple "USED PARAMETER" as illustrated in FIG. 6.

In the field "FEATURE ID", the identification information of a target feature of detection by the vehicle mounted device 1 which generates the condition information IC is registered. This identification information is the identification information of the feature that is uniquely allocated in the advanced map DB 43. In the field "SENSOR TYPE", information indicative of the type of the external sensor 31 used for the detection of the feature by the vehicle mounted device 1 which generates the condition information IC is registered. In the field "MANUFACTURER INFORMATION", information indicative of the manufacturer of the external sensor 31 used for the detection of the feature by the vehicle mounted device 1 which generates the condition information IC is registered. In the field "HARDWARE ID", information to identify the model of the external sensor 31 used for the detection of the feature by the vehicle mounted device 1 which generates the condition information IC is registered. In the field "POSTURE OF VEHICLE", information indicative of the posture, at the time of detecting the feature, of the vehicle equipped with the vehicle mounted device 1 which generates the condition information IC is registered. For example, on the basis of detection signals from internal sensors such as the gyroscope sensor 33 and the acceleration sensor 34, the vehicle mounted device 1 calculates the roll angle, pitch angle and yaw angle of the vehicle at the time of detecting the feature and registers information indicative of these angle in the field "POSTURE OF VEHICLE" . In the field "SPEED OF VEHICLE", there is registered information indicative of the speed of the vehicle equipped with the vehicle mounted device 1 which generates the condition information IC based on the output of the speed sensor 35 at the time when the vehicle detects the feature. In the field "POSITION OF VEHICLE", there is registered information indicative of the position of the vehicle equipped with the vehicle mounted device 1 which generates the condition information IC based on the output of the GPS receiver 32 at the time when the vehicle detects the feature.

It is noted that, no matter whether or not the detection of the feature succeeds, each corresponding information is registered in the fields "POSTURE OF VEHICLE", "SPEED OF VEHICLE" and "POSITION OF VEHICLE". In other words, when the detection of the feature succeeds, the posture, speed and position of the vehicle at the time of the success detection are registered in the fields "POSTURE OF VEHICLE", "SPEED OF VEHICLE" and "POSITION OF VEHICLE". In contrast, when the detection of the feature fails, the posture, speed and position of the vehicle at the time of the false detection are registered in these field. This is true of other fields "TIME", "WEATHER" and multiple " USED PARAMETER"

In the field "TIME", the time when the feature is detected is registered. In the field "WEATHER", the weather at the time of the feature detection is registered. The vehicle mounted device 1 may determine the weather to be registered in the field "WEATHER" by using the output of an illuminance meter and/or a raindrop sensor or by acquiring weather information from a server device which stores weather information.

Multiple fields "USED PARAMETER" ("1^{ST} USED PARAMETER" and "2^{ND} USED PARAMETER" in FIG 6), configuration information of the external sensor 31 used for feature detection at the time of the feature detection is registered. For example, in cases where the external sensor 31 used for the feature detection is a LIDAR, configuration information indicative of the laser power of the LIDAR, the laser pulse density thereof or the angle range of laser emission thereof at the time of the feature detection is registered in the fields "USED PARAMETER" , respectively. In another example, in cases where the external sensor 31 used for the feature detection is a camera, configuration information indicative of the frame rate of the camera, the resolution thereof or the field of view thereof is registered in the fields "USED PARAMETER", respectively.

### [Process Flow]

### (1) Process by Vehicle Mounted Device

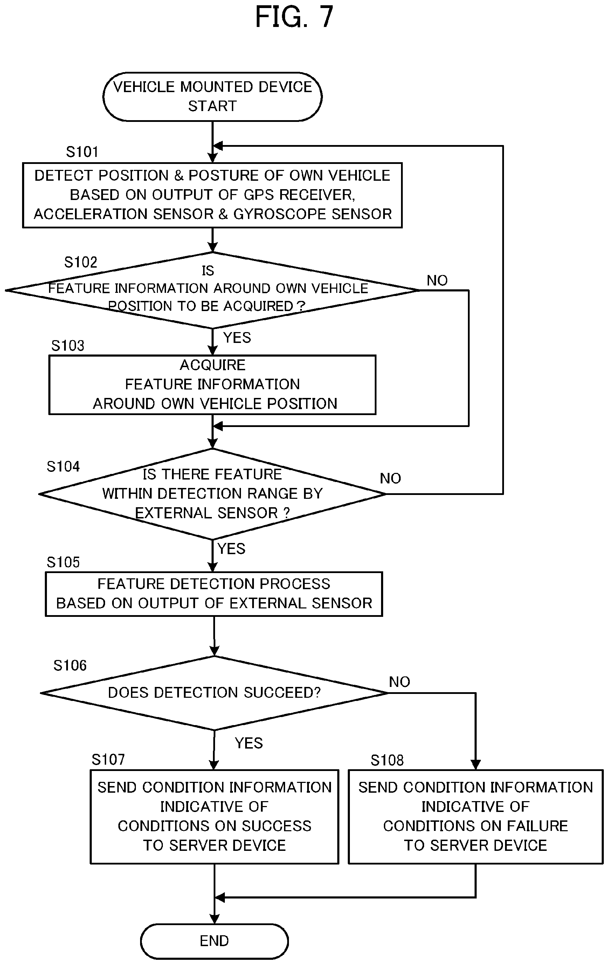

FIG. 7 illustrates an example of a flowchart indicative of the procedure of the process executed by the vehicle mounted device 1. The vehicle mounted device 1 repeatedly executes the process of the flowchart in FIG. 7.

First, the vehicle mounted device 1 detects the present position, the present posture and the present speed of the vehicle based on the output of the GPS receiver 32, the gyroscope sensor 33, the acceleration sensor 34 and the speed sensor 35 (step S101) .

Next, the feature information acquisition part 21 of the vehicle mounted device 1 determines whether or not the feature information IF around the own vehicle position is to be acquired from the server device 4 (step S102) . In this case, for example, at the time of getting away from the last position of receiving the feature information IF from the server device 4 by more than a predetermined distance, the feature information acquisition part 21 determines that the feature information IF around the own vehicle position is to be acquired from the server device 4. In another example, at the time of entering one of divided areas which the vehicle mounted device 1 has not entered for a predetermined time, the feature information acquisition part 21 determines that the feature information IF around the own vehicle position is to be acquired from the server device 4. Thereafter, the feature information acquisition part 21 acquires the feature information IF corresponding to the area at step S103 to be mentioned later.

When the feature information acquisition part 21 determines that the feature information IF around the own vehicle position is to be acquired from the server device 4 (step S102; Yes), the feature information acquisition part 21 acquires the feature information IF around the own vehicle position from the server device 4 (step S103) . In this case, by sending to the server device 4 a request signal for requesting the feature information IF including the own vehicle position detected at step S101, the feature information acquisition part 21 receives the feature information IF around the own vehicle position from the server device 4. In this case, the feature information acquisition part 21 may receive the map data around the own vehicle position including the feature information IF. In contrast, when the feature information acquisition part 21 has already acquired the feature information IF around the own vehicle position from the server device 4 (step S102; No), the feature information acquisition part 21 proceeds with the process at step S104.

Next, the feature detection part 22 of the vehicle mounted device 1 determines whether or not there is a feature situated within the detection range by the external sensor 31 (step S104) . For example, the feature detection part 22 determines whether or not the position indicated by the field "COORDINATES" of the feature information IF received from the server device 4 is within the detection range by the external sensor 31. It is noted that the feature detection part 22 may identify the detection range by the external sensor 31 by referring to information, which is preliminarily stored on the storage unit 12, indicative of the detection range by the external sensor 31 or may calculate the detection range by the external sensor 31 based on parameters applied to the external sensor 31.

When determining that there is a feature situated within the detection range by the external sensor 31 (step S104; Yes), the feature detection part 22 performs a detection process of the feature based on the output of the external sensor 31 (step S105) . In this case, by referring to the fields of the sensor attribute of the feature information IF corresponding to the target feature of detection, the feature detection part 22 recognizes information on parameters to apply to the external sensor 31 that is used for the detection of the feature. Then, for example, the feature detection part 22 determines whether or not the target feature is detected though a known feature detection method by comparing the output of the external sensor 31 with the contents in the fields "COORDINATES" and "ATTRIBUTE INFORMATION" of the feature information IF illustrated in FIG. 4. It is noted that the feature detection part 22 may terminate the process of the flowchart without executing the following process at step S106 to S108 if the feature detection part 22 determines that the detection of the feature is difficult or impossible as a result of reference to the sensor attribute field of the feature information IF corresponding to the target feature of detection.

When the feature detection part 22 succeeds in the detection of the target feature (step S106; Yes), the condition information transmission part 23 of the vehicle mounted device 1 sends the condition information IC indicative of conditions on the success to the server device 4 (step S107). In this case, the condition information transmission part 23 registers, in the field "HEADER ID" in the condition information IC to be sent, a particular identification number which indicates that the corresponding body information is generated at the time of successful detection. In contrast, when the feature detection part 22 fails to detect the target feature (step S106; No), the condition information transmission part 23 sends the condition information IC indicative of conditions on the failure to the server device 4 (step S108) . In this case, the condition information transmission part 23 registers, in the field "HEADER ID" in the condition information IC to be sent, a particular identification number which indicates that the corresponding body information is generated at the time of failure of the detection.

### (2) Process by Server Device

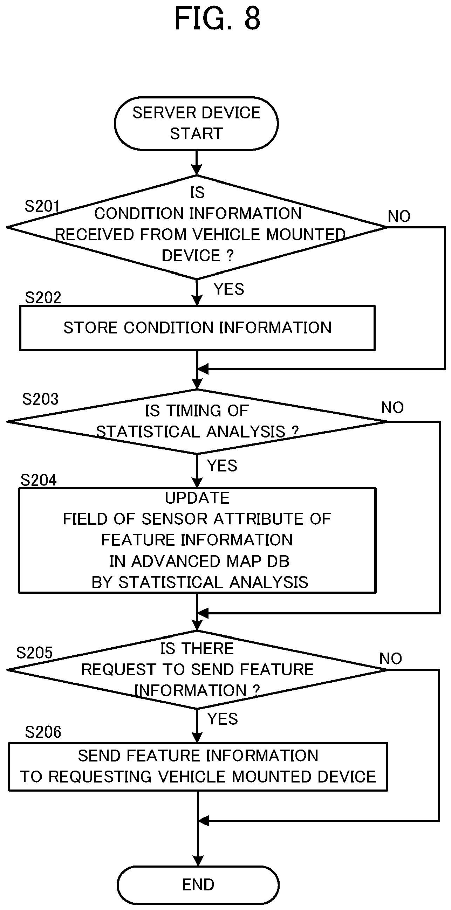

FIG. 8 is an example of a flowchart indicative of the procedure of the process executed by the server device 4. The server device 4 repeatedly executes the process of the flowchart in FIG. 8.

First, the condition information acquisition part 47 of the server device 4 determines whether or not the server device 4 receives the condition information IC from the vehicle mounted device 1 (step S201). When determining that the server device 4 receives the condition information IC from the vehicle mounted device 1 (step S201; Yes), the condition information acquisition part 47 stores the received condition information IC (step S202) . In this case, for example, the condition information acquisition part 47 stores the condition information IC per feature ID. In contrast, when determining that the server device 4 does not receive the condition information IC from the vehicle mounted device 1 (step S201; No), the condition information acquisition part 47 proceeds with the process at step S203.

Next, the sensor attribute update part 48 of the server device 4 determines whether or not the statistical analysis is to be executed (step S203) . For example, if there is such a feature ID that the number of the corresponding condition information IC stored is equal to or larger than a predetermined number, the sensor attribute update part 48 determines that the statistical analysis on the condition information IC corresponding to the above feature ID is to be executed. In this case, the above-mentioned predetermined number is preliminarily determined to the minimum required number for the statistical analysis.

When determining that the statistical analysis is to be executed (step S203; Yes), the sensor attribute update part 48 updates the sensor attribute field(s) of the feature information IF in the advanced map DB 43 through the statistical analysis (step S204). In this case, for example, for the feature information IF corresponding to the feature ID that the minimum required number of the condition information IC for the statistical analysis are stored, the sensor attribute update part 48 updates values of subfields provided in the sensor attribute field(s). When the sensor attribute update part 48 updates the sensor attribute field(s), the sensor attribute update part 48 also updates the version registered in the version information of the corresponding header information. In contrast, when the sensor attribute update part 48 determines that the statistical analysis is not to be executed (step S203; No), the sensor attribute update part 48 proceeds with the process at step S205.

Next, the feature information transmission part 46 of the server device 4 determines whether or not the server device 4 receives from the vehicle mounted device 1 a transmission request for the feature information IF (step S205). If the feature information transmission part 46 determines that the server device 4 receives the transmission request for the feature information IF from the vehicle mounted device 1 (step S205; Yes), the feature information transmission part 46 sends the corresponding feature information IF to the requesting vehicle mounted device 1 (step S206) . In this case, with reference to the position information included in the transmission request for the feature information IF and the field "COORDINATES" in the body information in the feature information IF corresponding to each feature, the feature information transmission part 46 extracts from the advanced map DB 43 the feature information IF corresponding to a feature situated within a predetermined distance from the position indicated by the position information included in the transmission request. In contrast, the feature information transmission part 46 determines that there is no transmission request for the feature information IF (step S205; No), the feature information transmission part 46 terminates the process of the flowchart.

As explained above, according to the embodiment, feature information IF for each target feature of detection by an external sensor 31 of a vehicle mounted device 1 is registered in an advanced map DB 43 stored on a server device 4. The data structure of the feature information IF is provided with sensor attribute fields that include configuration information or environment information related to feature detection. The server device 4 updates the sensor attribute field through statistical analysis on condition information IC that indicates conditions at the time of feature detection and that is received from a plurality of vehicle mounted devices 1. Thereby, the server device 4 can store and update, as the feature information IF, configuration information and environmental information regarding the external sensor 31 to be used for feature detection. Accordingly, the server device 4 sends the feature information IF to the vehicle mounted device 1 to thereby enables the vehicle mounted device 1 to suitably perform feature detection.

### [Modifications]

Next, a description will be given of preferred modifications of the embodiment. The following modifications may be applied to the above embodiment in any combination.

### (First Modification)

The vehicle mounted device 1 may receive from the server device 4 the feature information IF only including the sensor attribute associated with the external sensor (s) 31 of the vehicle mounted device 1.

In this case, the vehicle mounted device 1 sends to the server device 4 a transmission request for the feature information IF so that the transmission request includes the type information of the external sensor (s) 31 of the vehicle mounted device 1. Then, at the time of receiving the transmission request for the feature information IF, the server device 4 sends to the vehicle mounted device 1 the feature information IF from which the sensor attributes irrelevant to the external sensor(s) 31 indicated by the above type information included in the transmission request are omitted. In another example, the server device 4 stores information indicative of installed external sensor (s) 31 with respect to each vehicle . Then, when the vehicle mounted device 1 sends the vehicle information for identifying the own vehicle to the server device 4, the server device 4 sends the feature information IF from which the sensor attributes irrelevant to the external sensor(s) 31 installed on the vehicle corresponding to the received vehicle information are omitted. According to this example, the vehicle mounted device 1 does not have to receive the sensor attributes relating to external sensors other than the installed external sensor (s) .

### (Second Modification)

The vehicle mounted device 1 may receive only the sensor attribute from the server device 4 instead of receiving the feature information IF.

In this case, for example, the vehicle mounted device 1 preliminarily stores on the storage unit 12 map data including feature information IF in which the information other than the sensor attributes is registered. Then, the vehicle mounted device 1 determines, at step S102 in FIG. 7, whether or not sensor attribute(s) around the own vehicle position are to be acquired and receives from the server device 4 information indicative of the sensor attribute(s) around the own vehicle position at step S103. According to this mode, it is possible to suitably reduce the volume of data transmission between the vehicle mounted device 1 and the server device 4. In this case, in combination with the first modification, the vehicle mounted device 1 may receive only the sensor attribute (s) relevant to the external sensor(s) 31 of the vehicle mounted device 1.

### (Third Modification)

The vehicle mounted device 1 may send to the server device 4 information associated with the date or the season at the time of detecting the feature as a part of the condition information IC instead of or in addition to the information associated with the time and the weather at the time of detecting the feature. For example, in cases where the feature is a tree and the like, since the amount and/or the color of the leaves thereof vary depending on seasons, proper configuration on an external sensor 31 for detection may varies depending on seasons. By receiving and storing such condition information IC from multiple vehicle mounted devices 1 for statistical analysis, the server device 4 can suitably update the sensor attributes of the feature information IF registered in the advanced map DB 43 even for features which vary in appearance depending on seasons.

In addition, the present invention is not limited to the above embodiment and these can be accordingly changed in the range where the changes do not go against the gist or the ideas which can be seen in all of the claims and the specification, and the feature data structure, the storage medium, the information processing device and the detection device to which the changes are applied are also included in the technical scope of the present invention.

### BRIEF DESCRIPTION OF REFERENCE NUMBERS

- 1: Vehicle mounted device
- 4: Server device
- 11, 41: Communication unit
- 12, 42: Storage unit
- 13: Sensor unit
- 14: Input unit
- 15,: 45 Control unit
- 16: Output unit
- 31: External sensor
- 43: Advanced map DB

### FURTHER EXEMPLARY EMBODIMENTS:

Example 1 is a feature data structure regarding a feature, comprising: a detection-related information field configured to include configuration information or environmental information which are related to detection of the feature, the detection-related information field being updatable based on a detection result by a detection device which detects the feature.

Example 2 is the feature data structure according to example 1, wherein the detection-related information field is updated by a server device which statistically analyzes detection results by detection devices mounted on vehicles.

Example 3 is the feature data structure according to example 1 or 2, wherein the detection-related information field is provided with respect to each type of the detection device.

Example 4 is the feature data structure according to example 3, wherein the detection-related information, with respect to each type of the detection device, includes a subfield indicative of the configuration information or the environmental information which are related to the detection of the feature.

Example 5 is the feature data structure according to example 4, wherein the subfield includes at least one of a time slot of day and weather in which a detection rate of the feature by each type of the detection device is equal to or higher than a predetermined value or the detection rate is lower than a predetermined value.

Example 6 is the feature data structure according to example 4 or 5, wherein the subfield includes information indicative of a spatial range regarding the feature in which a detection rate of the feature by each type of the detection device is equal to or higher than a predetermined value or the detection rate is lower than a predetermined value.

Example 7 is the feature data structure according to any one of examples 1 to 6, further comprising a position information field indicative of information associated with a position of the feature and an attribute information field indicative of information associated with an attribute of the feature, wherein the detection device detects the feature based on the information associated with the position of the feature and the information associated with the attribute of the feature.

Example 8 is a storage medium which stores a record with the feature data structure according to any one of examples 1 to 7.

## Claims

1. An information processing device comprising:
a storage unit configured to store a record with a feature data structure regarding a feature, the feature data structure including a detection-related information field configured to include configuration information or environmental information which are related to detection of the feature, the detection-related information field being updatable based on a detection result by a detection device which detects the feature, the detection device being mounted on a vehicle;
an acquisition unit configured to acquire state information which includes information associated with at least one of, at a time when a detection of the feature by the detection device succeeds or fails, a state of the vehicle, a state of surroundings of the vehicle and a state of the detection device; and
an update unit configured to update the detection-related information field based on the state information acquired by the acquisition unit.

2. The information processing device according to claim 1,
wherein the acquisition acquires a plurality of the state information associated with a feature sent from vehicles, and
wherein the update unit determines an updated content of the detection-related information field corresponding to the feature by statistically analyzing the plurality of the state information.

3. A detection device comprising:
a detection unit configured to detect an object situated in surroundings of a vehicle;
an acquisition unit configured to acquire from an external device a record with a data structure including a position information field indicative of information associated with a position of a feature and a detection-related information indicative of information associated with a detection of the feature;
an identification unit configured to identify the object detected by the detection unit as the feature based on the information associated with the position of the feature; and
a transmission unit configured to send to the external device state information which includes information associated with at least one of, at a time when an identification of the feature by the identification unit succeeds or fails, a state of the vehicle, a state of surroundings of the vehicle and a state of the detection unit,
wherein the detection unit changes a configuration associated with a detection of the object based on the information associated with the detection of the feature.

4. The detection device according to claim 3, wherein the detection-related information includes a subfield indicative of a detection condition in which a success rate of detecting the feature is equal to or higher than a predetermined value, and
wherein the detection unit changes a range of a detection area by the detection unit based on the detection condition in which the success rate of detecting the feature is equal to or higher than the predetermined value.

5. The detection device according to claim 3, wherein the detection-related information includes a subfield indicative of a detection condition in which a success rate of detecting the feature is lower than a predetermined value, and
wherein the detection unit omits the feature from a target of a detection if a state of the vehicle, a state of surroundings of the vehicle or a state of the detection unit satisfies the detection condition in which the success rate of detecting the feature is lower than the predetermined value.
